Europäisches Patentamt

European Patent Office

Office européen des brevets

(19)

(11) Publication number: **0 519 149 A1**

# EUROPEAN PATENT APPLICATION

(12)

(21) Application number: **91830273.8**

(22) Date of filing: **20.06.91**

(51) Int. Cl.5: **A01K 39/02**, A01K 7/06

(43) Date of publication of application:
**23.12.92 Bulletin 92/52**

(84) Designated Contracting States:
**AT BE CH DE DK ES FR GB GR IT LI LU NL SE**

(71) Applicant: **GIORDANO POULTRY-PLAST S.p.A.**
**Via Bernezzo 47**
**I-12023 Caraglio (Cuneo)(IT)**

(72) Inventor: **Giordano, Osvaldo**
**Via Dante Livio Bianco 14**
**I-12023 Caraglio (Cuneo)(IT)**

(74) Representative: **Buzzi, Franco et al**
**c/o Jacobacci-Casetta & Perani S.p.A. Via**
**Alfieri, 17**
**I-10121 Torino(IT)**

(54) **System for watering poultry.**

(57) A system for watering poultry includes lines (1) suspended at variable heights and including at least one horizontal pipe (9) connected to a water supply. The pipe (9) carries a plurality of normally-closed valves (10) which can be opened by the poultry and are fitted in respective holes in the pipe (9). Each valve (10) includes a body (24, 36, 53) defining an internal annular valve seat (43) which cooperates sealingly with an annular obturator (46) carried by a rod (47) which projects below the body (24, 36, 53) and can pivot relative thereto so as to move the obturator (46) at least partially away from the valve seat (43) against the action of a thrust spring (52). The valve seat (43) is defined by an axial appendage projecting downwardly from the end of the body (24,26, 53) towards the obturator (46) and having a sharp edge, the body having an internal annular shoulder (57a) below the obturator (46) which has a flat upper surface (50) of deformable material. A flat lower surface of the obturator is adapted to engage the internal shoulder (57a) of the body in the event of overpressure or damage to the thrust spring (52).

FIG. 1

The present invention relates to a system for watering poultry, including at least one suspended line including at least one horizontal pipe connected to a water supply, means for suspending the pipe at an adjustable height, a plurality of normally-closed valves which can be opened by the poultry and are fitted in respective holes in the pipe, each valve comprising a body defining an annular valve seat which cooperates sealingly with an annular valve obturator which contacts it from below and is carried by a rod which projects below the body and can pivot relative thereto in order to move the obturator at least partially away from the valve seat against the action of a thrust spring which urges the obturator upwardly.

The document EP-A-356 932 describes a valve suitable for association with a poultry-watering system of the type defined above. The valve includes an obturator associated with a movable rod which can be operated by the poultry, the obturator being adapted to engage an annular valve seat the edges of which are curved slightly away from the rod which is movable relative to the obturator. Because of the shape of the valve, if solid particles dispersed in the liquid for supply to the poultry become interposed between the seat and the obturator, the valve may seal badly. Moreover, the presence of a choke pin above the obturator means that the duct through which the liquid flows may be blocked, making the valve unusable. If the thrust spring wears out or yields, or the entire system is subjected to an anomalous overpressure, the valves tend to open, allowing the liquid to flow. Moreover, the many male-and-female screw connections in the system make it complex as well as difficult and slow to assemble and disassemble.

The object of the present invention is to avoid the problems to which the valves according to the known solution are prone, thus providing a generally simpler and more functional system which is distinguished by very quick assembly and disassembly and in which the seals in the individual valves are also improved.

The object is achieved by virtue of the fact that in each valve:
the valve seat is defined by an internal axial appendage projecting downwardly from the body towards the obturator,
the body has an inner, annular shoulder below the obturator,
the obturator has a flat, upper end surface defining a frontal seal for cooperating with the axial appendage of the body and a flat, annular lower surface axially opposite the annular shoulder.

By virtue of this construction, the valves of the watering system according to the present invention are particularly efficient in operation, ensuring an effective seal in all operative conditions of the system and also enabling the flow of liquid to be cut off in the event of anomalous overpressure in the supply circuit of the system or the wearing-out or breakage of the thrust spring, thus preventing unnecessary distribution. Moreover, the valves do not tend to be damaged if solid particles are dispersed in the liquid.

Preferably, the axial appendage has a circular, sharp edge and the flat, upper surface of the obturator is defined by a deformable plate.

Conveniently, the obturator is substantially frustoconical, its larger end facing downwardly and defining the flat, annular lower surface.

Further, secondary advantageous characteristics of the system are the subjects of Claims 4 to 14.

The invention is explained in detail below with reference to the appended drawings, provided purely by way of non-limiting example, in which:

Figure 1 is a schematic perspective view of part of a poultry-watering system according to the invention,

Figure 2 is a perspective view of the detail indicated by the arrow II of Figure 1 showing, on an enlarged scale, the way in which it is assembled,

Figure 3 is a side elevational view taken on the arrow III of Figure 2,

Figure 4 is a partially-sectioned vertical view taken on the line IV-IV of Figure 2,

Figure 5 is a partial vertical section taken on the line V-V of Figure 2,

Figure 6 is a section taken on the line VI-VI of Figure 3,

Figure 7 is a section taken on the line VII-VII of Figure 6,

Figure 8 is an exploded perspective view of Figure 5,

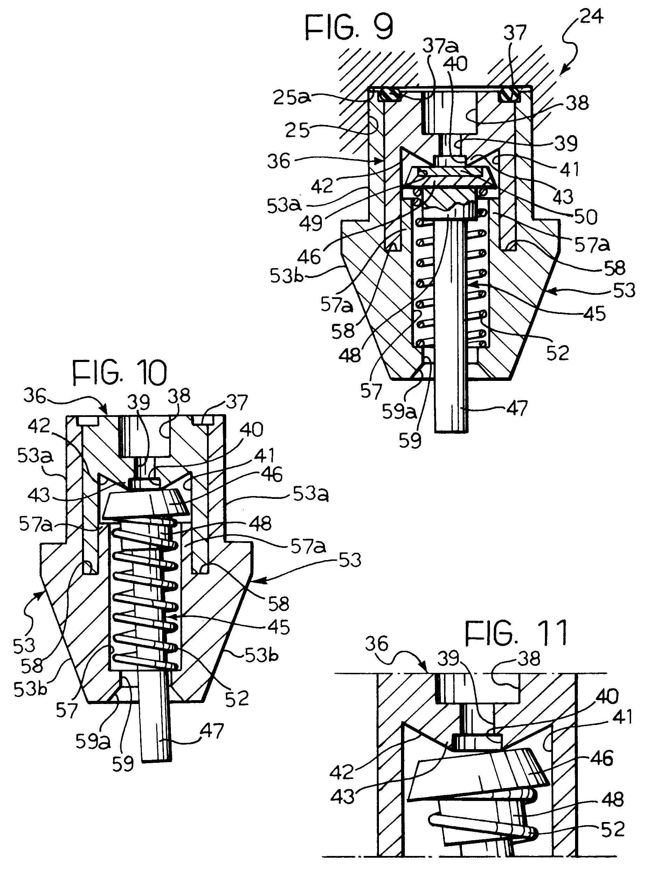

Figure 9 shows part of Figure 6 on an enlarged scale,

Figure 10 is a view similar to Figure 9, showing the normal operating mode,

Figure 11 shows a detail of Figure 10, on an enlarged scale,

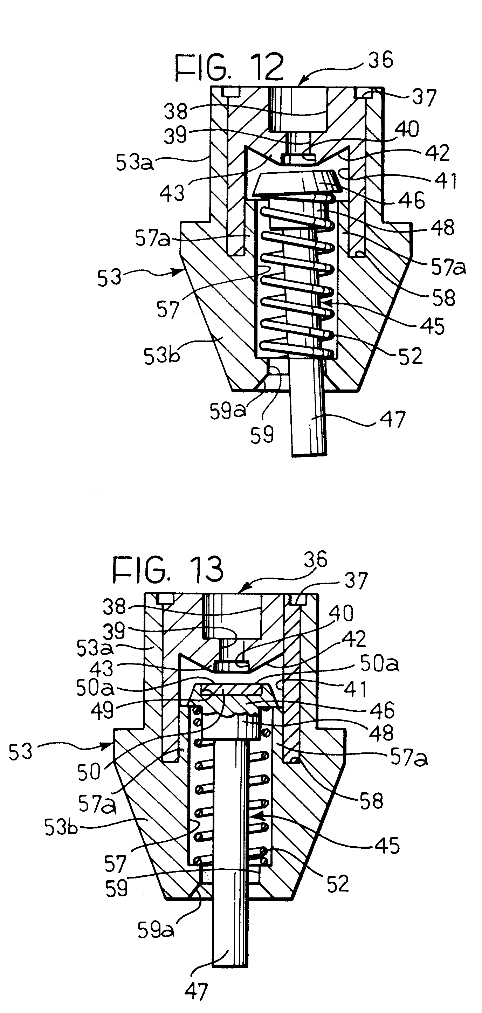

Figure 12 is a view similar to Figure 10, showing another operating mode (when there is an anomalous overpressure or a worn-out spring),

Figure 13 is a view similar to Figure 10, showing a further operating mode,

Figure 14 is a perspective view of the detail indicated by the arrow XIV in Figure 1 on an enlarged scale, showing the way in which it is assembled,

Figure 15 is an exploded perspective view taken on the arrow XV of Figure 14,

Figure 16 is a vertical section taken on the line XVI-XVI of Figure 15,

Figure 17 is a perspective view similar to Figure 1, showing some variants of another detail of the system, on an enlarged scale and partially exploded,

Figure 18 shows a variant of Figure 1, and

Figure 19 is an exploded perspective view of the detail indicated by the arrow XIX of Figure 18, on an enlarged scale.

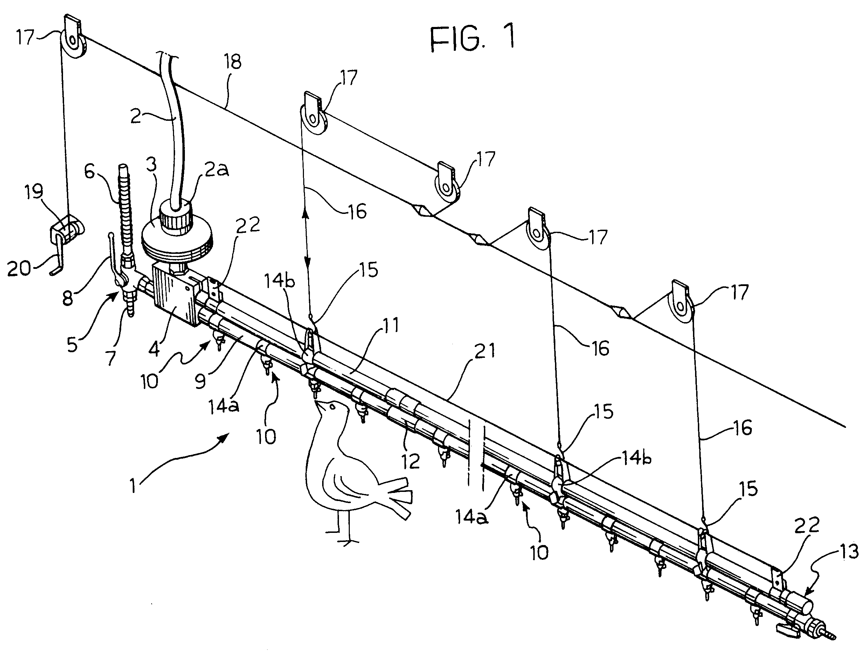

With reference initially to Figure 1, the poultry-watering system of the present invention includes suspended main lines, indicated 1.

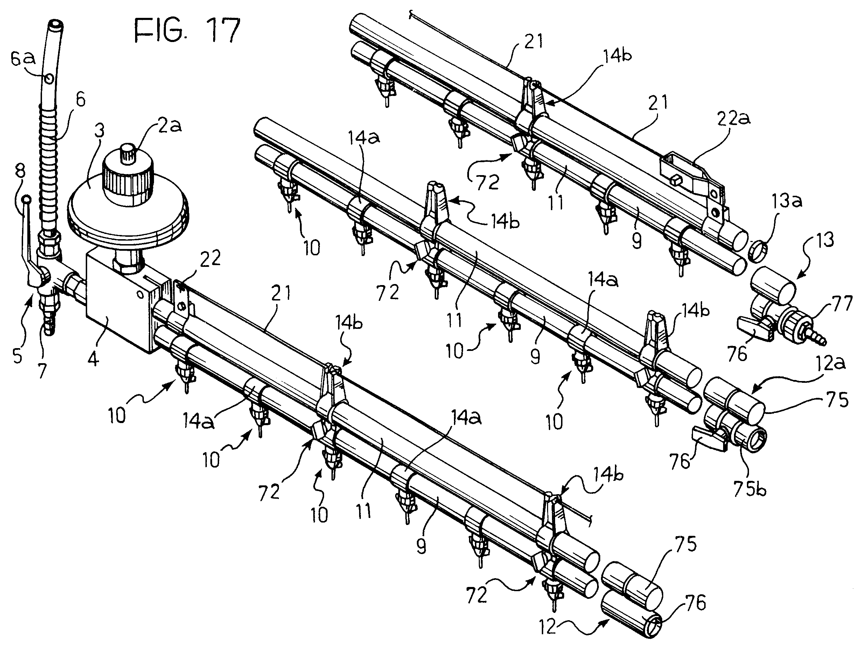

A rubber pipe 2 supplies the liquid for delivery to the poultry to a pressure regulator 3 through a stopper 2a connected to the pipe 2. The pressure regulator 3 ensures that the correct pressure is reached for the supply of the liquid throughout the line 1. It is connected to a manifold 4 one side of which is connected to a connector 5 carrying a level indicator 6 with a float 6a (Figure 17). The connector 5 also includes a tap 7 which can be opened manually by a lever 8. A pipe 9, to which the liquid is sent for supply to the poultry, is connected to the other side of the manifold 4. The pipe 9 carries a series of valves 10 which can be opened by the poultry by operating a device which will be described in detail in the following description. Above the pipe 9 is a tubular element 11 for supporting the line 1 mechanically.

Connectors 12 for connecting adjacent portions of the lower pipe 9 and upper tubular support elements 11, together with cocks 13 for the ends of the lines, are described in greater detail below.

The valves 10 can be fitted to the pipe 9 by clips 14a or clamping and support members 14b. The members 14b interconnect the pipe 9 and the tubular support 11 at various points along the line 1 and are adapted to be engaged by hooks 15 connected to lifting cables 16 for varying the height of the line 1 above a floor (not shown in the drawings) for the poultry. This facilitates the watering of the animals as they grow.

The lifting cables 16 pass around pulleys 17 and are connected to a common cable 18 wound around a drum 19 which can be operated by a crank 20 so as to vary the heights of the lines 1 above the floor.

Above the tubular element 11 and parallel thereto is a cable 21, the "anti-perching" cable which prevents the poultry from perching on the tubular element 11. The cable 21 is tensioned by tensioning elements 22 at the ends of the line 1.

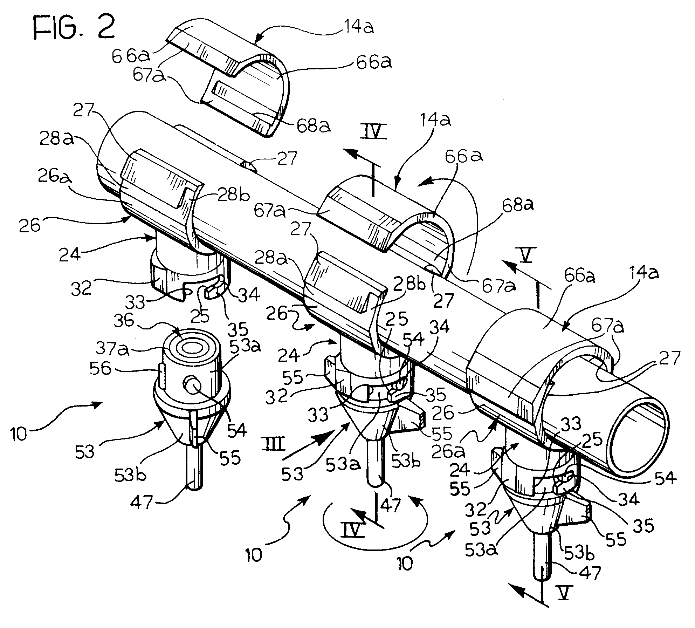

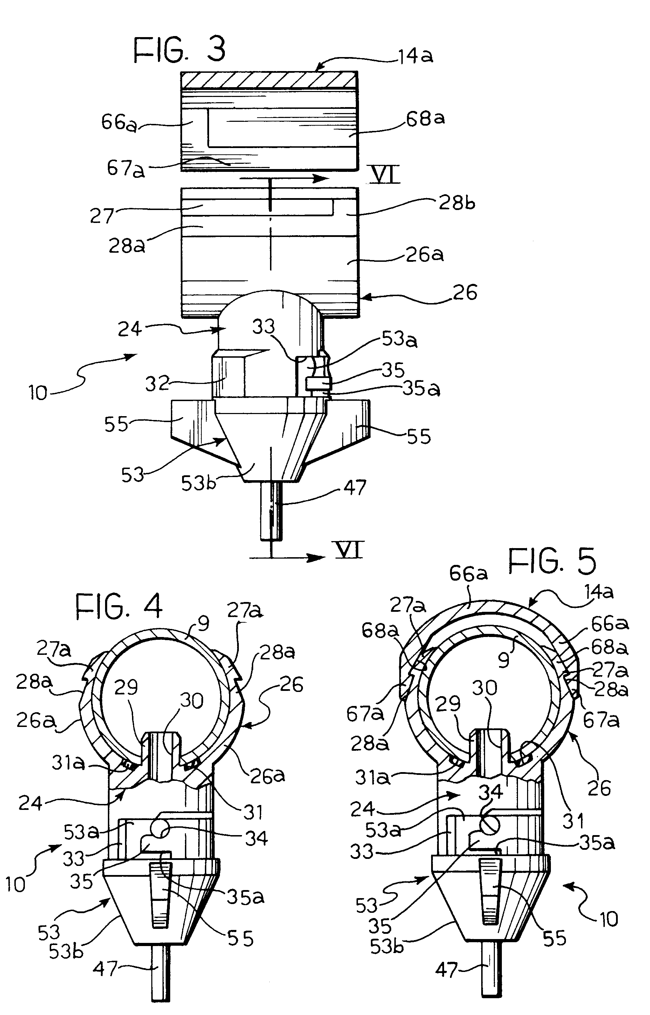

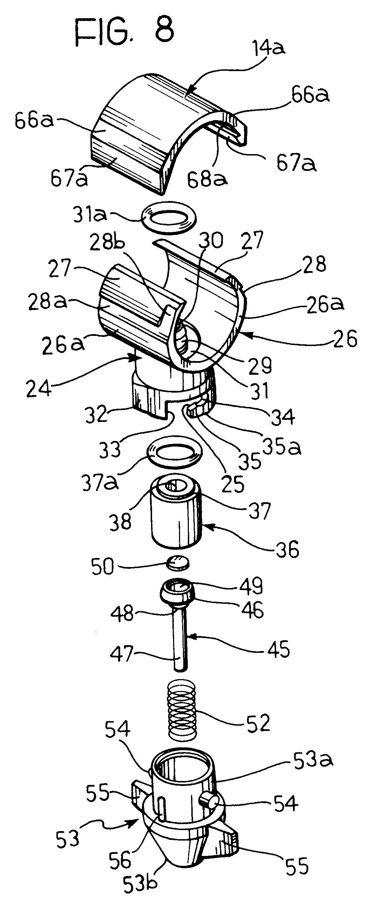

Figures 2 to 8 show the valve units 10 fitted on the pipe 9 in greater detail.

Each individual valve unit 10 includes a cylindrical valve body 24 with a coaxial cavity 25. A partially open sleeve element 26 is arranged transversely above the body 24 (with reference to the drawings) and is connected rigidly thereto, its cross-section extending through an arc of at least 180°. The element 26 may be regarded as being constituted by two substantially symmetrical arms 26a with tapered ends 27, near which there are axial grooves 28a. The grooves 28a form steps and each has a tangential groove 28b at one end near an edge of the element 26, the grooves 28b being at opposite ends of the two arms 26a.

A pin 29 with a through-hole 30 extends from the body 24 into the element 26 and is engaged in a transverse hole in the pipe 9. Near the base of the pin 29 is an annular groove 31 which houses a sealing ring 31a.

The body 24 includes a thick outer reinforcing wall 32 and two diametrally opposed "L"-shaped slots 33. Each slot 33 has a circular end portion 34 and defines a support 35 with chamfered edges (the purpose of which will be explained further below) beneath which is an undercut portion 35a.

A bush 36 inserted in the body 24 has an upper projection 37 defining a seat for housing a sealing ring 37a.

The upper part of the bush 36 has an axial hole 38 the lower end of which communicates with a hole 39 of smaller diameter and then with a hole 40 whose diameter is intermediate those of the holes 38 and 39, the lower end of the hole 40 being connected by means of an annular frustoconical portion 42 to a further hole 41 with a diameter larger than that of the hole 38. The frustoconical portion 42 defines a sharp edge 43 between the hole 41 and the hole 40 and projecting away from the hole 38. A valve member 45 inserted in the hole 41 includes a valve obturator 46 at its upper end facing the sharp edge 43 of the bush 36, and an operating rod 47 of smaller diameter at its opposite end. Between the rod 47 and the obturator 46 is a cylindrical portion 48 with a diameter intermediate those of the other two portions. The obturator 46 is frustoconical with its larger surface facing the rod 47.

A shallow blind hole 49 in the obturator 46 constitutes a hollow portion in which a small pad 50 of deformable, preferably elastomeric, material is inserted.

One end of a helical spring 52 which urges the obturator towards the sharp edge 43 bears on a shoulder between the obturator 46 and the cylindrical portion 48 of smaller diameter.

An outlet terminal 53 is fitted over the spring 52 so as to house the member 45, its spring 52, and the bush 36. It includes an upper tubular portion 53a and a lower, frustoconical portion 53b.

Projecting transversely from the tubular portion 53a are pins 54 for engaging the cylindrical holes 34 in the valve body 24 to form a bayonet coupling, as well as fins 55 for the operation of the bayonet coupling between the terminal 53 and the body 24. An axial rib 56 also projects from the portion 53a for snap-engagement in a corresponding seat in the cavity 25 in the body 24 when the bayonet coupling is coupled to constitute a safety device against the accidental release of the coupling. The supports 35 which effect the coupling yield resiliently by virtue of the undercut portions 35a and then return to the positions illustrated when the coupling has been effected.

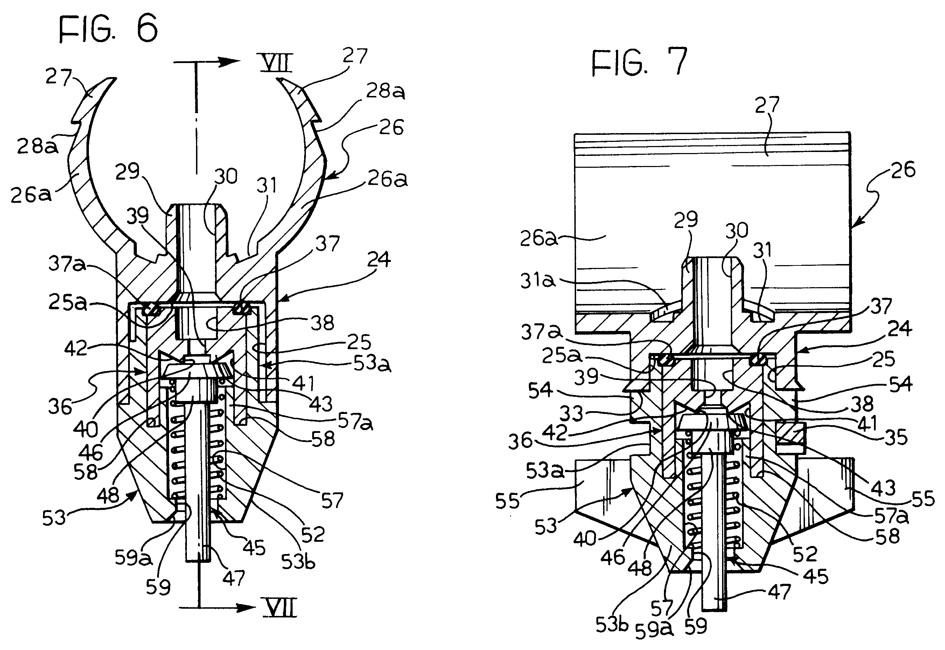

As shown more clearly in Figures 6 and 7, the terminal 53 includes a cylindrical cavity 57 which is adapted to house the spring 52 and ends near a reduced-diameter hole 59 with a chamfer 59a which faces outwardly. The upper end of the hole 57 has an annular rim 57a which constitutes a shoulder facing the lower end of the obturator 46.

Between the rim 57a and the tubular portion 53a is an annular slot 58 for housing the lower edge of the sleeve 36.

The arcuate clip 14a clamps the sleeve element 26 onto the pipe 9 quickly and extremely effectively. It includes two arms 66a each having a tapered end portion 67a with an internal groove 68a which is shorter than each arm 66a and forms a step, the groove 68a being adapted to engage the grooves 28a and 28b in the sleeve element 26. The stages of the clamping of the element 26 to the pipe 9 by means of the member 14a are shown in sequence in Figure 2.

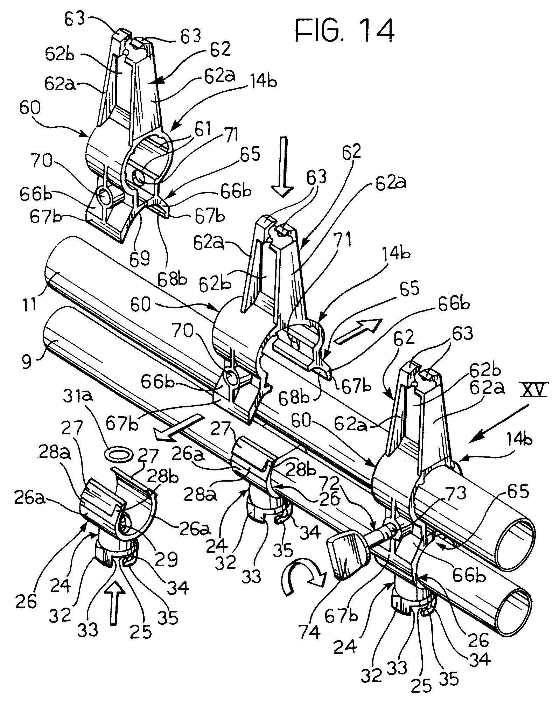

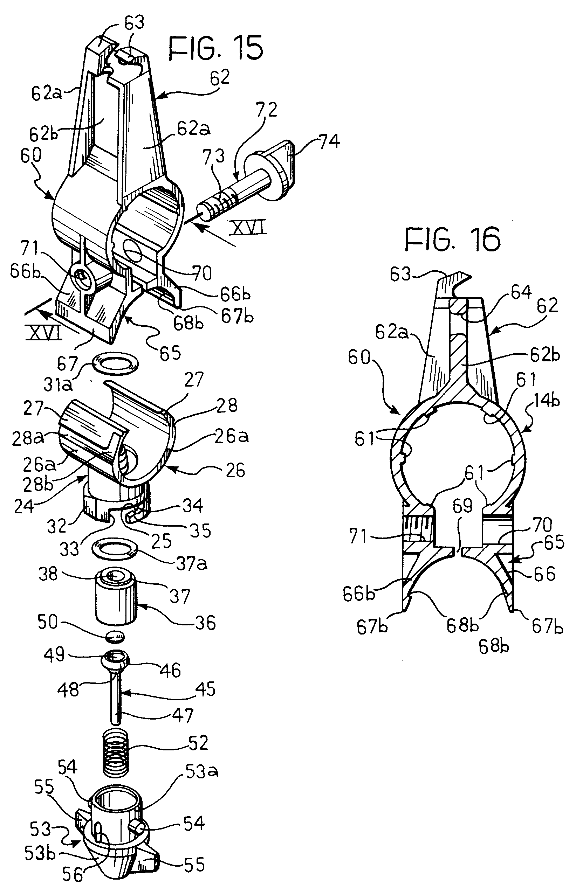

With reference to Figures 14 to 16, the member 14a may be replaced by a member 14b which, as well as clamping the element 26 and the valve body 24 in a predetermined position on the pipe 9, also keeps the pipe 9 and the tubular support element 11 close together.

The support and clamping member 14b is more complex in shape than the member 14a and includes a substantially tubular central body 60 with internal longitudinal ribs 61 which are adapted to bear against the outer surface of the tubular support element 11. On top of the central body 60 is a tapered, substantially "H"-sectioned portion with flanges 62a and a central core 62b arranged longitudinally of the central body 60. The core 62b has a transverse hole at its upper end for the engagement of hooks 15 connected to the lifting cables 16. The top of the tapered portion 62 has two opposed, axially offset hooks 63 whose function is to define a substantially circular space for housing the anti-perching wire 21.

A lower body 65, whose structure and function are similar to those of the clip 14a, is connected to the central body 60. The lower body 65 includes two arcuate arms 66b with tapered ends 67b each having an internal groove 68a defining a step for engaging a corresponding step defined by the grooves 28a in the sleeve body 26.

Unlike the arms 66a of the body 14a, the arms 66b of the member 14b are separated by a central slot 69 so that they can be moved apart to enable the tubular mechanical support element 11 to be inserted in the central body 60.

Between the central body 60 and the lower body 65 is a portion including a through-hole transverse the axis of the central body 60. The hole has two separate portions of which a first portion 70 has a smooth, cylindrical interior whereas the other portion 71 is threaded. The transverse holes 70 and 71 can be engaged by a screw 72 whose thread 73 can mate with the thread of the hole 71. The head of the screw 72 has a flange 74 so that it can be tightened manually.

Under normal, non-operative conditions, the valve 10 is closed since the obturator 46 is urged against the sharp edge 43 to prevent the flow of the liquid for watering the poultry. The force exerted by the spring 52 depends upon its mechanical characteristics and its preloading. The force may be regarded as being constant even when the valve is opened partially as a result of a transverse movement of the rod 47 which causes the obturator 46 and, more particularly, the plate 50 to move away from the valve seat constituted by the sharp edge 43. In fact, any deformation of the spring 52 is very small compared with its overall length.

The application of a force substantially perpendicular to the axis of the rod 47 gives rise to a turning moment with a lever arm of the order of the length of the rod 47 and a pivot point near a point on the sharp edge 43, opposed by a moment which is the product of the force exerted by the spring 52 on the lower edge of the obturator 46 and a lever arm which, in this case, is equal to the radius of the cylindrical hole 40. The large difference between the lever arms determining the two opposing moments means that the force needed to open the valve is very small even if the spring is heavily preloaded. An effective hydraulic seal can thus be ensured by heavy preloading of the spring 52 even when the liquid to be supplied to the poultry is at a high pressure.

Should the pressure of the liquid nevertheless reach particularly high, anomalous values or should the spring wear out or break, the pressure of the liquid will act on the obturator 46 of the valve so that its base engages the shoulder constituted by the annular edge 57a, thus closing the duct for the fluid through the valve.

The chamfer 59a at the bottom of the terminal 53 ensures that, even if the hole 59 undergoes plastic deformation as a result, for example, of pecking by the animals, the rod 47 can still pivot to open the valve 10.

The path followed by the liquid within the valve 10 has a series of enlargements and restrictions which prevent the liquid from running in a continuous stream when the valve is opened, thus encouraging the formation of a series of drops which run along the rod 47 and are supplied to the animal.

The clamping members 14a and 14b enable the valve 10 to be engaged on the pipe 9 particularly quickly and the maintenance of the valves 10 is facilitated by the bayonet couplings between the bodies 24 and the terminals 53.

Once a valve 10 has been fitted on the pipe 9 in correspondence with one of its transverse holes by opening out the arms 26a of the sleeve element 26, the sleeve 26 can be clamped on the pipe 9 by forcing the arms 66a of the member 14a over the corresponding arms 26a until the corresponding grooves 68a and 28a are snap-engaged. The tangential portion 28b of the groove on the element 26 which engages the non-grooved portion of the arms 67a of the member 14a prevents the member 14a from coming off axially.

When the valve 10 is fixed by means of the members 14b, as shown in Figure 14, the arms 66b are first moved apart so that the tubular element 11 can be inserted in the central portion 60 bearing against the ribs 61, then the grooves 68b are engaged with the corresponding grooves 28a and 28b, and the members 14b are then clamped transversely by tightening the screws 72 into the members 14b.

Figure 17 shows in greater detail elements for connecting adjacent portions of the pipe 9 as well as cocks for the ends of the lines.

Connectors 12 for connecting adjacent portions of the pipe 9 and of the tubular support elements 11 are constituted by tubular portions 75 and 76 arranged side by side.

The connectors 12 may be replaced by similar elements 12a each including a cock 76c inserted in an element 76b for preventing the liquid from reaching adjacent lines.

An end cock 13 fitted at the end of each line has a washer 13a and a cock 76c so that the line can be connected to an outlet 77 which can be opened, for example, when liquid is to be admitted to the line 1 at a high pressure for washing and/or disinfecting the water pipe and then drained away.

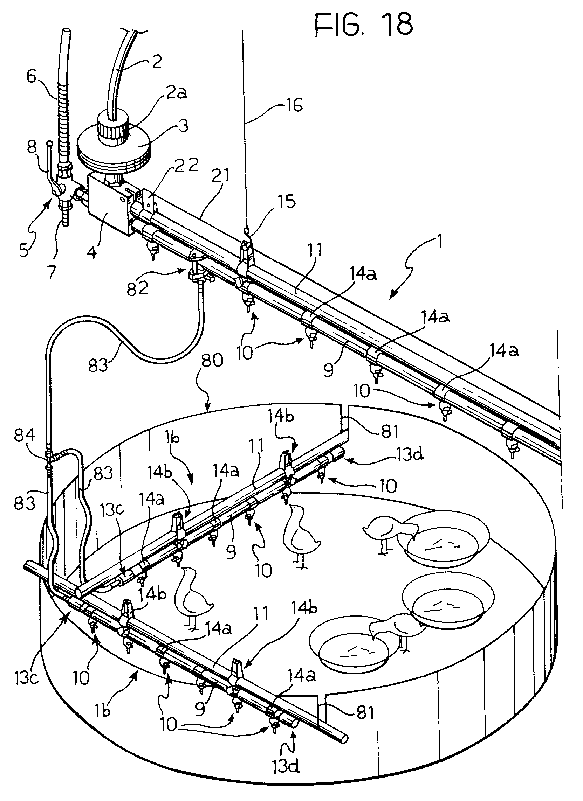

If the poultry consists of chicks, the chicks are grouped in "brooders" 80 (Figure 18). In this case, the chicks do not drink directly from the main line 1 but from similar secondary lines 1b the ends of which are supported, for example, in notches 81 in the walls of the brooder 80. In order to make the best use of the brooder, two secondary lines 1b may conveniently be used in a "V" arrangement.

The secondary lines 1b are connected to an on-off valve 82 which is also fitted in a transverse hole in the pipe 9 of a main line 1.

The secondary lines 1b are thus supplied by means of the valve 82 from which a flexible pipe 83 extends and is split to form two branches by a connector 84.

In this case, the liquid enters the pipes 9 of the lines 1b through end members 13c constituted by stoppers with holes. The opposite end of each secondary line 1b is closed by a stopper 13d similar to the stoppers 13c but closed at the end.

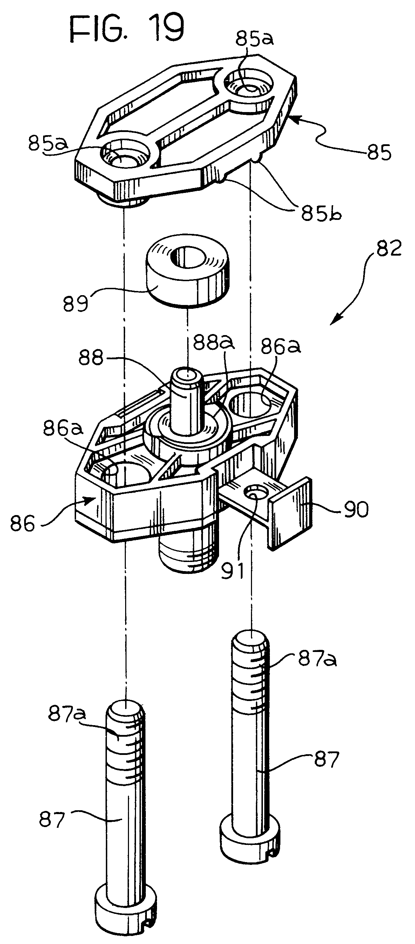

Figure 19 shows a valve 82 in greater detail. It includes an upper plate 85 with threaded through-holes 85a and paired projections 85b on its lower surface near its centreline for facilitating the centering of pipes 9 of different diameters. A lower plate 86 also has two through-holes 86a for the sliding engagement of two screws 87, the threaded end portions 87a of which engage the threaded holes 85a.

A pin just like the pins 29 in the valves 10 projects from the top of the plate 86. The base of the pin 88 is surrounded by a shaped surface 88a for housing a cylindrical washer 89, the function of which is to form a seal between the pipe 9 and the lower plate 86.

The plate 86 carries a slide 90 with a hole 91 which, if it is visible externally, indicates that the valve has been switched to enable the liquid to flow.

Naturally, the forms of embodiment and details of construction may be varied widely without thereby departing from the scope of the present invention.

**Claims**

1. A poultry-watering system including:

   at least one suspended line (1) including at least one horizontal pipe (9) connected to a water supply,

   means (15, 16, 17, 18, 19, 20) for suspending the pipe (9) at an adjustable height,

   a plurality of normally-closed valves (10) which can be opened by the poultry and are fitted in respective holes in the pipe (9), each valve (10) comprising a body (24, 36, 53) defining an annular valve seat (43) which cooperates sealingly with an annular valve obturator (46) which contacts it from below and is carried by a rod (47) which projects below the body (24, 36, 53) and can pivot relative thereto in order to move the obturator (46) at least partially away from the valve seat (43) against the action of a thrust spring (52) which urges the obturator (46) upwardly,

   characterised in that:

   the valve seat (43) is defined by an internal axial appendage projecting downwardly from the body (24, 36, 53) towards the obturator (46),

the body (24, 36, 53) has an inner, annular shoulder (57a) below the obturator (46),

the obturator (46) has a flat, upper end surface defining a frontal seal for cooperating with the axial appendage (43) of the body (24, 36, 53) and a flat, annular lower surface axially opposite the annular shoulder (57a).

2. A system according to Claim 1, characterised in that the axial appendage (43) has a circular base with a sharp edge and in that the flat upper surface of the obturator (46) is defined by a deformable plate (50).

3. A system according to Claim 2, characterised in that the obturator (46) is substantially frustoconical with its larger end facing downwardly and defining the lower flat annular surface.

4. A system according to Claim 3, characterised in that the body (24, 36, 53) includes an upper connector (24) which has a cylindrical skirt housing a bush (36) which carries the axial appendage (43) constituting the valve seat, and a lower outlet terminal (53) carrying the annular shoulder (57a) and connected to the cylindrical skirt (24) by a bayonet coupling (33, 34, 35, 54), the connector (24) having an tubular axial shank (29) for force-fitting into the pipe (9).

5. A system according to Claim 4, characterised in that the connector also has an upper, substantially semicircular, cradle-like element (26) which is disposed around the pipe (9) from below and an arcuate retaining member (14a) which is disposed astride the pipe (9) from above and snap-engaged (28a, 28b, 68a) onto the cradle-like element (26).

6. A system according to Claim 5, characterised in that it also includes a tubular support element (11) extending above and parallel to the pipe (9), and in that at least some of the arcuate retaining members (14b) for the connectors (26) have respective upper extensions (60, 62) including portions (60) for engaging the tubular support element (11).

7. A system according to Claim 6, characterised in that the means for suspending the pipe comprise a mechanism with cables (16, 18) and pulleys (17), and in that the upper extensions (62) of the connectors (26) have holes (64) for the anchorage of the cables.

8. A system according to Claim 6 or Claim 7, characterised in that it also includes a wire (21) parallel to and above the tubular support element (11), and in that the upper extensions (60, 62, 65) of the connectors also have lateral arms (63) for retaining the wire (21).

9. A system according to Claim 6, characterised in that the annular passages are defined in the respective upper extensions (60, 62, 65) of the connectors by two arms (66b) which can be moved apart and have respective holes (70, 71) for the engagement of a radial fixing member (72).

10. A system according to any one of the preceding claims, characterised in that it has connectors (12, 12a) for connecting adjacent pipes (9) and end members (13) for the pipes (9) having cocks (76).

11. A system according to Claim 10, characterised in that each line (1) has a pressure regulator (3) connected to a level indicator (66a) at one end of a pipe (9).

12. A system according to any one of the preceding claims, characterised in that it also includes at least one subsystem including at least one auxiliary pipe (16) which has valves (10) and means for suspending it at a height lower than that of the or each pipe (9) and is connected by means of an end connector (13c) and a flexible pipe (83) to an on-off valve (82) fitted in a hole in the pipe (9).

13. A system according to Claim 12, characterised in that the on-off valve (82) includes a lower plate (86) with a tubular appendage (89) which is fitted in a hole in the pipe (9), an operating slide (90) which forms part of the lower plate (86) for cutting off the flow of the liquid for supply to at least one auxiliary line (1b) through the tubular appendage (88), and an upper plate (85) connected to the lower plate (86) by tie bolts (87).

14. A system according to Claim 12 or Claim 13, characterised in that the subsystem includes at least two auxiliary lines (1b) in a generally "V"-shaped arrangement.

# FIG. 1

EP 0 519 149 A1

FIG. 2

FIG. 3

FIG. 4

FIG. 5

FIG. 7

FIG. 6

# FIG. 8

## FIG. 9

## FIG. 10

## FIG. 11

# FIG. 12

# FIG. 13

EP 0 519 149 A1

FIG. 14

14

FIG. 15

FIG. 16

FIG. 17

# FIG. 18

FIG. 19

85a

85a

85

85b

82

89

88a    86a

88

86a

86

90

91

87a

87a

87

87

87

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 097 769 (SUEVIA HAIGES) | 1,2 | A01K39/02 |
| A | * page 6, line 20 - page 8, line 12; figures 1,2,4,6 * | 3 | A01K7/06 |
| | --- | | |
| A,D | EP-A-0 356 932 (AQUA DROP CORPORATION) | 1,4 | |
| | * column 6, line 17 - line 49; figures 1,5-7 * | | |
| | --- | | |
| A | GB-A-1 248 622 (FIORETTO) | 5 | |
| | * figures 2,4 * | | |
| | --- | | |
| A | US-A-4 984 537 (STEUDLER) | 4 | |
| | * figures 1,2 * | | |
| | --- | | |
| A | US-A-4 669 422 (STEUDLER) | 6-11 | |
| | * column 2, line 29 - line 61; figures 1-5 * | | |
| | --- | | |
| A | US-A-4 892 061 (STEUDLER) | 7-12 | |
| | * abstract; figures 1,2 * | | |
| | --- | | |
| A | US-A-4 794 881 (RADER) | | |
| | --- | | TECHNICAL FIELDS SEARCHED (Int. Cl.5) |
| A | FR-A-2 413 874 (LA BUVETTE) | | |
| | ----- | | A01K |
| | | | F16K |

The present search report has been drawn up for all claims

| Place of search | Date of completion of the search | Examiner |
|---|---|---|
| THE HAGUE | 22 JANUARY 1992 | VON ARX V.U. |